(19)

Europäisches
Patentamt
European
Patent Office
Office européen
des brevets

(11) **EP 4 365 151 A1**

(12) **EUROPEAN PATENT APPLICATION**
published in accordance with Art. 153(4) EPC

(43) Date of publication:
**08.05.2024 Bulletin 2024/19**

(21) Application number: **21948516.6**

(22) Date of filing: **30.06.2021**

(51) International Patent Classification (IPC):
*C04B 35/63* $^{(2006.01)}$    *C04B 35/632* $^{(2006.01)}$
*C04B 35/634* $^{(2006.01)}$    *C04B 35/636* $^{(2006.01)}$
*C04B 35/04* $^{(2006.01)}$    *C04B 35/66* $^{(2006.01)}$

(52) Cooperative Patent Classification (CPC):
**C04B 35/04; C04B 35/63; C04B 35/632;**
**C04B 35/634; C04B 35/636; C04B 35/657;**
**C04B 35/66**

(86) International application number:
**PCT/KR2021/008260**

(87) International publication number:
**WO 2023/277216 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Toyo Chemical Co., Ltd.**
**Busan 46301 (KR)**

(72) Inventor: **JAHANI, Morteza Farshbaf**
**Tokyo 135--0061 (JP)**

(74) Representative: **Witthoff Jaekel Steinecke**
**Patentanwälte PartG mbB**
**Postfach 1140**
**52412 Jülich (DE)**

(54) **REFRACTORY LIQUID BINDER AND REFRACTORY BRICK COMPRISING SAME**

(57)    The present invention relates to a refractory liquid binder and a refractory brick comprising same, the binder comprising a reaction product formed from: a basic compound comprising at least one selected from the group consisting of alkali metal and alkaline earth metal; and an organic acid containing 3 or more of functional groups.

FIG.1

EP 4 365 151 A1

Processed by Luminess, 75001 PARIS (FR)

**Description**

TECHNICAL FIELD

The present invention relates to a liquid binder for a refractory, which has excellent eco-friendliness because it may prepare a refractory with less harmful gas generation and excellent quality, and a refractory brick including the same.

BACKGROUND ART

In general, refractories used in ironmaking and/or steelmaking processes require high corrosion resistance and high heat resistance, and such refractories are mainly used in an electric furnace, a converter, a ladle, or a torpedo ladle car. A conventional refractory has been prepared by using a phenol resin as a binder, but the refractory prepared by using the phenol resin are thermally decomposed by heat generated during ironmaking and steelmaking operations to generate various decomposition gases. Since these decomposition gases contain a large amount of an aromatic organic compound, they are known to adversely affect the human body. Particularly, phenol, cresol, or xylenol in the decomposition gas has a strong irritating odor to produce a serious odor and pollute working environment and surrounding environment.

Conventionally, as a method to improve this problem, the refractory was preheated and used until the thermal decomposition of the phenol resin was completed, but this method had a limitation in that an effect of reducing the odor was not large and it adversely affected physical properties of the refractory. Also, the preheating method has not been a fundamental solution because harmful gas is also generated at a manufacturing site, not a use site.

As an alternative to this, Korean Patent No. 967408 (Patent Document 1) discloses a carbon-containing refractory composition including a carbon-containing refractory aggregate and a binder, wherein the binder includes magnesium sulfate, lignosulfonate, and water. However, since a refractory including magnesium sulfate and lignosulfonate, as in Patent Document 1, is thermally decomposed during high-temperature exposure, hot properties and erosion resistance may be poor.

Thus, there is a need for research and development on a binder for a refractory, which may prepare a refractory having less harmful gas generation during high-temperature exposure and having excellent physical properties such as hot properties, strength, and erosion resistance, and a refractory brick including the same.

DISCLOSURE OF THE INVENTION

TECHNICAL PROBLEM

An aspect of the present invention provides a liquid binder for a refractory, which may prepare a refractory having less harmful gas generation during high-temperature exposure and having excellent physical properties such as hot properties, strength, and erosion resistance, and a refractory brick including the same.

TECHNICAL SOLUTION

According to an aspect of the present invention, there is provided a liquid binder for a refractory which includes a reactant of a basic compound including at least one selected from the group consisting of an alkali metal and an alkaline earth metal; and an organic acid containing three or more functional groups.

According to another aspect of the present invention, there is provided a refractory which includes the liquid binder for a refractory; and a refractory material.

According to another aspect of the present invention, there is provided a refractory brick which includes the liquid binder for a refractory; and a refractory material.

ADVANTAGEOUS EFFECTS

A liquid binder for a refractory according to the present invention is environmentally friendly because there is no emission of an aromatic organic compound generated while a phenol resin, as a conventional binder, is thermally decomposed by heating, which is a problem of the phenol resin. Also, with respect to the phenol resin, an aging time of 3 to 24 hours is required after kneading, but, with respect to the liquid binder for a refractory according to the present invention, productivity is excellent because forming is possible immediately after kneading, and kneading time may be shortened due to excellent kneading properties. Furthermore, with respect to a thermosetting resin such as the phenol resin, a heat treatment at a predetermined temperature or higher is required to develop strength after forming, but the liquid binder for a refractory according to the present invention is a water-based binder, wherein it may reduce energy costs by significantly reducing drying time.

Also, since a refractory and/or a refractory brick, which include the liquid binder for a refractory, has excellent physical properties such as hot properties, strength, and erosion resistance, the refractory and/or the refractory brick may be used in industrial fields where a high-temperature melt is used, such as ironmaking and steelmaking. Particularly, since the refractory and/or the refractory brick have excellent refractory performance, the refractory and/or the refractory brick may be used in various fields, for example, an electric furnace, a ladle, a converter, a torpedo ladle car, and refining processes such as steelmaking and ironmaking.

## BRIEF DESCRIPTION OF THE DRAWINGS

FIG. 1 is a component analysis result of decomposition gas released from a refractory of Example 52; and
FIG. 2 is a component analysis result of decomposition gas released from a refractory of Comparative Example 1.

## MODE FOR CARRYING OUT THE INVENTION

Hereinafter, the present invention will be described in detail.

## Liquid Binder for Refractory

A liquid binder for a refractory of the present invention includes a reactant of a basic compound and an organic acid containing three or more functional groups.

The liquid binder for a refractory is in the form of a liquid, wherein it has excellent storage stability, has excellent kneading property with a refractory material, and has excellent eco-friendliness because there is no emission of harmful gas, which is a problem of a phenol resin.

### Basic Compound

A basic compound plays a role in imparting viscosity to the binder by reacting with an organic acid.

The basic compound includes at least one selected from the group consisting of an alkali metal and an alkaline earth metal.

The alkali metal may include at least one selected from the group consisting of at least one metal selected from the group consisting of sodium (Na) and potassium (K), an oxide thereof, a hydrate thereof, a halide thereof, a sulfide thereof, a nitride thereof, an oxysalt thereof, a carbonate thereof, and an organic acid salt thereof. Specifically, the alkali metal may include at least one selected from the group consisting of NaOH, NaCl, $Na_2O$, $Na_2CO_3$, $NaHCO_3$, $2Na_2CO_3 \cdot 3H_2O_2$, $K_2O$, KOH, KCl, $K_2S$, and $KNH_2$.

The alkaline earth metal may include at least one selected from the group consisting of at least one metal selected from the group consisting of magnesium (Mg) and calcium (Ca), an oxide thereof, a hydrate thereof, a halide thereof, a sulfide thereof, a nitride thereof, an oxysalt thereof, a carbonate thereof, and an organic acid salt thereof. Specifically, the alkaline earth metal may include at least one selected from the group consisting of MgO, $Mg(OH)_2$, $MgCO_3$, $MgO \cdot CaO$, $MgCO_3 \cdot CaCO_3$, CaO, $CaCO_3$, and CaOH. In this case, the magnesium oxide (MgO) may be at least one selected from the group consisting of caustic calcined magnesia, fused magnesia, sintered magnesia, and dead burned magnesia.

The basic compound may have an average diameter of 0.5 mm or less, 0.01 mm to 5.0 mm, 0.01 mm to 1.0 mm, 0.01 mm to 0.3 mm, or 0.01 mm to 0.045 mm. In a case in which the average diameter of the basic compound is within the above range, since it has high reaction activity with the organic acid due to a high specific surface area, a high-purity reaction product may be formed. Also, in a case in which the average diameter of the basic compound is greater than the above range, since the reaction activity with the organic acid is insufficient, a problem, in which reaction time is increased in order to obtain sufficient viscosity of the binder, and a problem, in which an unreacted component adversely affects homogeneity of the binder to adversely affect physical properties, such as hot strength, of the prepared product, may occur.

### Organic Acid

An organic acid plays a role in imparting viscosity to the binder by reacting with the basic compound.

The organic acid contains three or more functional groups. In this case, the functional group may be a carboxyl group (COOH). As described above, if the organic acid containing three or more functional groups is used, the organic acid has an effect of exhibiting strong viscosity by reacting with the basic compound.

Specifically, the organic acid may include at least one selected from the group consisting of citric acid and ethylenediaminetetraacetic acid.

The organic acid and the basic compound may be included in a weight ratio of 5 : 1.0 to 100 : 1.0, 5 : 1.0 to 50 : 1.0, or 5 : 1.0 to 25 : 1.0. In a case in which the weight ratio of the organic acid to the basic compound is less than the above range, that is, in a case in which a small amount of the organic acid is included based on a weight of the basic compound, the basic compound remaining after reacting with the organic acid may further react with the reaction product to lose viscosity of the binder, cause precipitation in the binder, or decrease strength of the prepared refractory material. Also, in a case in which the weight ratio of the organic acid to the basic compound is greater than the above range, that is, in a case in which an excessive amount of the organic acid is included based on the weight of the basic compound, the viscosity of the binder becomes insufficient due to the lack of cations (+) of the basic compound which may react with the organic acid, and, since the unreacted organic acid remains in the binder and reacts with the refractory material during the preparation of the product to generate heat, pot life may be reduced or surface dryness of the product may occur, and thus, strength may be reduced.

The liquid binder for a refractory may further include water.

Water

For example, the liquid binder may include a reactant obtained by reacting the cations (+) of the basic compound with the organic acid by adding the basic compound to an organic acid aqueous solution containing the organic acid and water.

The water and the organic acid may be included in a weight ratio of 1.0 : 0.2 to 1.0 : 0.8, 1.0 : 0.3 to 1.0 : 0.8, or 1.0 : 0.33 to 1.0 : 0.75. In a case in which the weight ratio of the water to the organic acid is less than the above range, that is, in a case in which a small amount of the organic acid is included based on a weight of the water, a problem may occur in which strength of the prepared refractory is decreased due to a decrease in concentration of the binder. Also, in a case in which the weight ratio of the water to the organic acid is greater than the above range, that is, in a case in which an excessive amount of the organic acid is included based on the weight of the water, precipitation may occur in the binder to decrease the viscosity of the binder and reduce the strength of the prepared refractory.

The liquid binder may include the water, the organic acid, and the basic compound in a weight ratio of 1 : 0.3 to 1.0 : 0.01 to 0.20, 1 : 0.3 to 0.75 : 0.02 to 0.17, or 1 : 0.33 to 0.75 : 0.025 to 0.15.

Also, the binder for a refractory may further include at least one selected from the group consisting of a stabilizer and a viscosity enhancer.

Stabilizer

The stabilizer plays a role in preventing a reduction in pot life due to the unreacted organic acid by reacting the unreacted organic acid with the surplus basic compound and preventing occurrence of precipitation of the binder due to the surplus basic compound.

Also, the stabilizer may be an organic acid or an inorganic salt, and, specifically, may include at least one selected from the group consisting of tartaric acid, lactic acid, oxalic acid, boric acid, and phosphoric acid.

The stabilizer may be included in an amount of 0.1 wt% to 15 wt% or 1 wt% to 8 wt% based on a total weight of the binder for a refractory. In a case in which the amount of the stabilizer is less than the above range, the pot life of the binder may be reduced or the precipitation may occur to reduce the strength and hot strength of the prepared refractory, and, in a case in which the amount of the stabilizer is greater than the above range, the strength and/or hot strength of the prepared refractory may be reduced due to the occurrence of the precipitation in the binder and the decrease in the viscosity which are caused by the excessive amount of the stabilizer.

Viscosity Enhancer

The viscosity enhancer plays a role in preventing a decrease in stability due to the evaporation of moisture by increasing the viscosity of the liquid binder for a refractory and in improving the kneading property with the refractory material.

Also, the viscosity enhancer, for example, may include at least one selected from the group consisting of corn starch, potato starch, carbomer, xanthan gum, methyl cellulose, meta methyl cellulose, and molasses.

The viscosity enhancer may be included in an amount of 0.1 wt% to 10 wt% or 0.5 wt% to 5.0 wt% based on the total weight of the liquid binder for a refractory. In a case in which the amount of the viscosity enhancer is less than the above range, it is difficult to obtain an effect due to the addition of the viscosity enhancer, and, in a case in which the amount of the viscosity enhancer is greater than the above range, since agglomeration of the binder occurs due to the excessive amount of the viscosity enhancer, kneading homogeneity may be reduced when kneading with the refractory material and deterioration of physical properties, such as specific gravity and dry strength, of the prepared product may occur.

Furthermore, the liquid binder for a refractory according to the present invention as described above may further include coke powder. In a case in which the coke powder is further included as described above, the liquid binder may be used as a binder for surface treatment of a refractory, particularly, for coating. In this case, with respect to an amount of the coke powder, the coke powder may be used without particular limitation as long as it has appropriate viscosity and workability to be used for surface treatment, particularly for coating.

Since the liquid binder for a refractory according to the present invention as described above has a better kneading property than a phenol resin as a conventionally used binder, kneading time is shortened, and thus, economic efficiency is excellent. Also, with respect to the phenol resin, an aging time of 3 to 24 hours is required after kneading, but, with respect to the liquid binder for a refractory according to the present invention, productivity may be improved because forming is possible immediately after kneading, and there is also an energy-saving effect because drying time is also reduced.

**Refractory**

A refractory according to the present invention includes the above-described liquid binder for a refractory; and a refractory material.

The refractory material may be used without particular limitation as long as it is commonly used as a raw material for the refractory, and, for example, may include at least one selected from the group consisting of magnesia-based, alumina-based, chromium-based, dolomite-based, and graphite-based refractory materials. Specifically, the refractory material may include at least one selected from the group consisting of magnesia-carbon-based, magnesia-alumina-carbon-based, alumina-silica-based, magnesia-chromium-based, magnesia-spinel-based, alumina-silicon carbide-carbon-based, alumina-carbon-based, and magnesia-based refractory materials. The graphite-based refractory material may include natural graphite, crystalline graphite, or expandable graphite.

Also, the refractory may include 1 part by weight to 10 parts by weight, or 1 part by weight to 5 parts by weight of the liquid binder for a refractory based on 100 parts by weight of the refractory material. In a case in which the parts by weight of the refractory material and the liquid binder are less than the above range, that is, in a case in which a small amount of the liquid binder is included based on the weight of the refractory material, erosion resistance of the refractory is reduced due to a decrease in forming strength and hot strength, and, in a case in which the parts by weight of the refractory material and the liquid binder are greater than the above range, that is, in a case in which an excessive amount of the liquid binder is included based on the weight of the refractory material, lifetime (erosion resistance) may be reduced due to an agglomeration phenomenon during kneading or a cracking phenomenon during pressing and a decrease in strength and an increase in porosity which are caused by volatilization of the binder at high temperatures.

Also, the refractory may further include at least one selected from the group consisting of a stabilizer and a viscosity enhancer. In this case, the stabilizer and the viscosity enhancer are the same as those described in the liquid binder.

The refractory may further include a hot property improving agent.

Hot Property Improving Agent

The hot property improving agent plays a role in improving hot strength, erosion resistance, or oxidation resistance of the refractory.

In this case, the hot property improving agent may be used without particular limitation as long as it may be typically added to the refractory to improve hot properties, and, for example, may include at least one selected from the group consisting of pitch, silicon nitride ($Si_3N_4$), boron carbide ($B_4C$), and carbon black.

The hot property improving agent may be included in an amount of 0.1 part by weight to 3.0 parts by weight or 0.1 part by weight to 1.0 part by weight based on 100 parts by weight of the refractory material. In a case in which the amount of the hot property improving agent is less than the above range, a hot property improving effect of the refractory may not be properly expressed, and, in a case in which the amount of the hot property improving agent is greater than the above range, forming strength and drying properties of the refractory may be reduced or a steel grade may be affected.

**Refractory Brick**

Also, a refractory brick according to the present invention includes the binder for a refractory; and a refractory material.

In this case, the refractory material is the same as described in the refractory.

The refractory brick may be a magnesia-carbon-based refractory brick, a magnesia-alumina-carbon-based refractory brick, an alumina-silica-based refractory brick, a magnesia-chrome-based refractory brick, a magnesia-spinel-based refractory brick, an alumina-silicon carbide-carbon-based refractory brick, an alumina-carbon-based refractory brick, an alumina-silicon carbide-magnesia-based refractory brick, or a magnesia-based refractory brick.

Also, the refractory brick may be a reduction fired brick, a fired brick, or a non-fired brick.

Since the refractory and/or the refractory brick according to the present invention as described above do not contain an organic resin such as a phenol resin, a volatile organic compound (VOC) is not generated during a preparation process, and thus, they are eco-friendly. Also, since the refractory and/or the refractory brick are excellent in physical properties necessary for the refractory, for example, compressive strength, porosity, erosion resistance, or spalling resistance, the refractory and/or the refractory brick may be used in industrial fields where a high-temperature melt is used, such as ironmaking and steelmaking. Particularly, since the refractory and/or the refractory brick have excellent refractory performance, the refractory and/or the refractory brick may be used in various fields, for example, an electric furnace, a ladle, a converter, a torpedo ladle car, and refining processes such as steelmaking and ironmaking.

Hereinafter, the present invention will be described in more detail with reference to the following examples. However, the following examples are only intended to specifically describe specific embodiments of the present invention, and are not intended to limit or restrict the scope of the present invention to the contents described in these examples.

**[Examples]**

**Examples 1 to 8. Preparation of Liquid Binders for Refractory**

Liquid binders for a refractory were prepared by using each component in an amount listed in Table 1.

Specifically, after water and an organic acid were mixed, a basic compound was added to react basic cations (+) with the organic acid to prepare the liquid binder for a refractory. Reaction temperature, reaction time, and viscosity were measured during the preparation of the liquid binder, a maximum value of the temperature was measured as the reaction temperature using a digital thermometer, and a time when the reaction temperature reached the maximum was measured as the reaction time. Also, the viscosity of the liquid binder was measured by dividing it into high, medium, and low by touch.

[Table 1]

| Component (parts by weight) | | Example 1 | Example 2 | Example 3 | Example 4 | Example 5 | Example 6 | Example 7 | Example 8 |
|---|---|---|---|---|---|---|---|---|---|
| Basic compound | $Na_2O$ | 7.5 | | | | | | | |
| | NaOH | | 7.5 | | | | | | |
| | $NaHCO_3$ | | | 7.5 | | | | | |
| | $2Na_2CO_3 \cdot 3H_2O_2$ | | | | 7.5 | | | | |
| | NaCl | | | | | 7.5 | | | |
| | $K_2O$ | | | | | | 7.5 | | |
| | KCl | | | | | | | 7.5 | |
| | KOH | | | | | | | | 7.5 |
| Water | | 100 | 100 | 100 | 100 | 100 | 100 | 100 | 100 |
| Organic acid | Citric acid | 50 | 50 | 50 | 50 | 50 | 50 | 50 | 50 |
| During preparation of binder | Reaction temperature (°C) | 110 | 120 | 34 | 35 | 30 | 103 | 33 | 126 |
| | Reaction time (hr) | 15 | 2 | 210 | 180 | 315 | 19 | 221 | 1 |
| Viscosity of liquid binder | | Medium | High | High | High | Medium | Medium | Medium | Medium |

As illustrated in Table 1, reaction rates of the basic compounds and the organic acid were in the order of KOH, NaOH, $Na_2O$, $K_2O$, $2Na_2CO_3 \cdot 3H_2O_2$, $NaHCO_3$, KCl, and NaCl. Also, with respect to the viscosity of the binder, the viscosities of the binders prepared using NaOH, $NaHCO_3$, and $2Na_2CO_3 \cdot 3H_2O_2$ were high regardless of the reaction temperature and the reaction rate, and the binders prepared using $K_2O$, KOH, KCl, $Na_2O$, and NaCl exhibited relatively low viscosity.

**Examples 9 to 13. Preparation of Liquid Binders for Refractory**

Liquid binders for a refractory were prepared by using each component in an amount listed in Table 2.

Specifically, after water and an organic acid were mixed in a weight ratio of 2:1 and sodium hydroxide (NaOH) was added as a basic compound, reaction temperature, reaction time, and viscosity were measured in the same manner as in Example 1.

[Table 2]

| Component (parts by weight) | | Example 9 | Example 10 | Example 11 | Example 12 | Example 13 |
|---|---|---|---|---|---|---|
| Basic compound | NaOH | 15 | 10 | 7.5 | 5 | 3 |
| Water | | 100 | 100 | 100 | 100 | 100 |
| Organic acid | Citric acid | 50 | 50 | 50 | 50 | 50 |
| During preparat ion of binder | Reaction temperature (°C) | 144 | 129 | 120 | 90 | 72 |
| | Reaction time (hr) | 2 | 2 | 2 | 2 | 2 |
| Viscosity of binder | | Low | Low | High | High | Medium |

As illustrated in Table 2, reaction temperature, reaction time, and viscosity according to an addition amount of NaOH, as the basic compound, are illustrated. The reaction temperature was increased as the addition amount of the basic compound was increased from 3 parts by weight to 15 parts by weight, but the viscosity was high at 5 parts by weight to 7.5 parts by weight. Also, with respect to Examples 9 and 10 in which the addition amount of the NaOH was 10 wt% or more, precipitates were formed when stored at room temperature for 5 hours or more, and the viscosity tended to decrease in a state in which the precipitates were formed.

**Examples 14 to 25. Preparation of Liquid Binders for Refractory**

Liquid binders for a refractory were prepared by using each component in an amount listed in Table 3.

Specifically, after water and an organic acid were mixed in a weight ratio of 2:1 and a basic compound was added, reaction temperature, reaction time, and viscosity were measured during the preparation of the binder. In this case, a maximum value of the temperature was measured as the reaction temperature using a digital thermometer, and a time when the reaction temperature reached the maximum was measured as the reaction time. The viscosity of the binder was measured by dividing it into high, medium, and low by touch.

[Table 3]

| Component (parts by weight) | | Examples | | | | | | | | | | | |
|---|---|---|---|---|---|---|---|---|---|---|---|---|---|
| | | 14 | 15 | 16 | 17 | 18 | 19 | 20 | 21 | 22 | 23 | 24 | 25 |
| Basic compoun d | Caustic calcined magnesia | 7.5 | | | | | | | | | | | |
| | Dead burned magnesia | | 7.5 | | | | | | | | | | |
| | Sintered magnesia | | | 7.5 | | | | | | | | | |
| | Fused magnesia | | | | 7.5 | | | | | | | | |
| | $Mg(OH)_2$ | | | | | 7.5 | | | | | | | |
| | $MgCO_3$ | | | | | | 7.5 | | | | | | |
| | $MgCl$ | | | | | | | 7.5 | | | | | |
| | $CaO$ | | | | | | | | 7.5 | | | | |
| | $Ca(OH)_2$ | | | | | | | | | 7.5 | | | |
| | $CaCO_3$ | | | | | | | | | | 7.5 | | |
| | Calcined dolomite (MgO-CaO) | | | | | | | | | | | 7.5 | |
| | Dolomite ore ($MgCO_3 \cdot CaCO_3$) | | | | | | | | | | | | 7.5 |
| Water | | 100 | 100 | 100 | 100 | 100 | 100 | 100 | 100 | 100 | 100 | 100 | 100 |
| Organic acid | Citric acid | 50 | 50 | 50 | 50 | 50 | 50 | 50 | 50 | 50 | 50 | 50 | 50 |
| During prepara tion of binder | Reaction temperature (°C) | 63 | 42 | 44 | 31 | 36 | 41 | 32 | 72 | 62 | 49 | 67 | 39 |
| | Reaction time (hr) | 180 | 360 | 362 | 720 | 320 | 372 | 415 | 36 | 52 | 182 | 51 | 256 |
| Viscosity of binder | | High | High | High | Med ium | High | Med ium | Low | Low | Low | Med ium | Low | Med ium |

As illustrated in Table 3, reaction rates of the basic compounds of alkaline earth metals and the organic acid were in the order of CaO, calcined dolomite, CaOH, caustic calcined magnesia, $CaCO_3$, $MgCO_3 \cdot CaCO_3$, $Mg(OH)_2$, dead burned magnesia (DBM), sintered magnesia, $MgCO_3$, MgCl, and fused magnesia, and viscosities of the binders were in the order of caustic calcined magnesia, dead burned magnesia, sintered magnesia, $Mg(OH)_2$, fused magnesia, $MgCO_3$, $MgCO_3 \cdot CaCO_3$, $CaCO_3$, $Ca(OH)_2$, MgCl, calcined dolomite, and CaO regardless of the reaction rate and the reaction temperature.

**Examples 26 to 33. Preparation of Liquid Binders for Refractory**

Liquid binders for a refractory were prepared by using each component in an amount listed in Table 4.
Specifically, reaction time, reaction temperature, and viscosity of the binder were measured during preparation while mixing water and an organic acid in a weight ratio of 2:1 and adjusting an addition amount of caustic calcined magnesia or CaO as a basic compound, and the reaction time, the reaction temperature, and the viscosity of the binder were measured in the same manner as in Example 14.

[Table 4]

| Component (parts by weight) | | Example 26 | Example 27 | Example 28 | Example 29 | Example 30 | Example 31 | Example 32 | Example 33 |
|---|---|---|---|---|---|---|---|---|---|
| Basic compound | Caustic calcined magnesia | 10 | 7 | 5 | 3 | | | | |
| | CaO | | | | | 5 | 3 | 2 | 1 |
| Water | | 100 | 100 | 100 | 100 | 100 | 100 | 100 | 100 |
| Organic acid | Citric acid | 50 | 50 | 50 | 50 | 50 | 50 | 50 | 50 |
| During preparation of binder | Reaction temperature (°C) | 69 | 61 | 56 | 48 | 69 | 51 | 45 | 33 |
| | Reaction time (hr) | 182 | 179 | 168 | 188 | 32 | 37 | 32 | 31 |
| Viscosity of binder | | High | High | High | High | Low | Medium | High | Medium |

As illustrated in Table 4, the viscosity of the binder was also increased when the addition amount of the caustic calcined magnesia was increased from 3 parts by weight to 10 parts by weight, but, with respect to Example 26 in which 10 parts by weight of the caustic calcined magnesia was added, since precipitation occurred 5 hours after the binder was prepared, the viscosity was reduced.

Also, with respect to Examples 30 to 33 in which an addition amount of CaO was changed from 1 part by weight to 5 parts by weight, viscosity of the binder of Example 32, in which the addition amount of CaO was 2 parts by weight, was the highest, and Examples 30 and 31 including 3 parts by weight to 5 parts by weight of CaO exhibited a decrease in viscosity due to the occurrence of precipitation.

**Examples 34 to 39. Preparation of Liquid Binders for Refractory**

Liquid binders for a refractory were prepared by using each component in an amount listed in Table 5.

Specifically, during preparation while fixing an amount of a basic compound and adjusting a weight ratio of water to an organic acid, reaction temperature, reaction time, and viscosity of the binder were measured in the same manner as in Example 14.

[Table 5]

| Component (parts by weight) | Example 34 | Example 35 | Example 36 | Example 37 | Example 38 | Example 39 |
|---|---|---|---|---|---|---|
| Water | 100 | 100 | 100 | 100 | 100 | 100 |
| Citric acid (organic acid) | 75 | 50 | 33 | 75 | 50 | 33 |
| Caustic calcined magnesia (alkaline earth metal oxide) | 5 | 5 | 5 | | | |
| NaOH (alkali metal hydrate) | | | | 5 | 5 | 5 |
| Reaction temperature during preparation (°C) | 64 | 56 | 43 | 121 | 108 | 85 |
| Reaction time during preparation (hr) | 183 | 181 | 188 | 2 | 2 | 2 |
| Viscosity of binder | High | High | Medium | High | High | Medium |

As illustrated in Table 5, when the ratio of the water to the organic acid was 3:1, 2:1, and 1.5:1, that is, as a concentration was increased, the reaction temperature during the preparation of the binder was increased and the viscosity of the binder was also increased.

As illustrated in Tables 1 to 5, if the addition amount of the basic compound was increased or the amount of the organic acid with respect to the water was increased, the viscosity of the binder was increased, and, since an amount of the basic compound in the form of dissolved cations (+) was increased as the addition amount of the basic compound was increased, a reaction product of the basic compound and the organic acid may be additionally reacted to form precipitates in the binder, and thus, the viscosity may be reduced. Since a reaction rate of the additional reaction was not rapid, the additional reaction may proceed gradually after the preparation of the binder to cause precipitation in the binder, and thus, it may affect storage stability and quality stability of the binder.

**Examples 40 to 44. Preparation of Liquid Binders for Refractory**

Liquid binders for a refractory were prepared by using each component in an amount listed in Table 6. In this case, L(+)-tartaric acid (solid content: 99.5 wt%) manufactured by SAMCHUN pure chemical Co., Ltd. was used as tartaric acid, and lactic acid (solid content: 8813 wt%) manufactured by SAMCHUN pure chemical Co., Ltd. was used as lactic acid.

Specifically, after the binder was prepared by adding a stabilizer, storage stability and quality stability of the binder were measured by the following methods and presented in Table 6.

1) Storage Stability

A deterioration state of the binder and occurrence of precipitation were visually measured while 2L of the liquid binder for a refractory was put in a 2L beaker, an upper portion of the beaker was sealed, and the beaker was stored for 2 months.

2) Quality Stability: Pot Life

82 parts by weight of magnesia, 3 parts by weight of aluminum, and 15 parts by weight of crystalline graphite were mixed as a refractory material, 2 parts by weight of the liquid binder for a refractory was added, and, after kneading the mixture at 25°C to 35°C for 15 minutes, the kneaded mixture was formed into a size of 60 mm × 60 mm × 60 mm on a 1 hour basis to prepare a refractory. A time when forming specific gravity of the prepared refractory became 3.0 was set as pot life.

[Table 6]

| Component (parts by weight) | | Example 40 | Example 41 | Example 42 | Example 43 | Example 44 |
|---|---|---|---|---|---|---|
| Caustic calcined magnesia (MgO) (alkaline earth metal oxide) | | 7.5 | 7.5 | 7.5 | 7.5 | 7.5 |
| Water | | 100 | 100 | 100 | 100 | 100 |
| Citric acid (organic acid) | | 50 | 50 | 50 | 50 | 50 |
| Stabilizer | Tartaric acid | | 5 | | | |
| | Lactic acid | | | 5 | | |
| | Phosphoric acid | | | | 5 | |
| | Boric acid | | | | | 5 |
| Storage stability | 1 week passed | Precipitation | No precipitation | No precipitation | No precipitation | No precipitation |
| | 3 weeks passed | Precipitation | No precipitation | No precipitation | No precipitation | No precipitation |
| | 2 months passed | Precipitation | No precipitation | No precipitation | No precipitation | No precipitation |
| Quality stability | Pot life (hr) | 5 | 24 | 24 | 24 | 24 |

As illustrated in Table 6, storage stability and quality stability of the binder were improved by the addition of highly reactive tartaric acid and lactic acid, and inorganic acids such as phosphoric acid and boric acid. Also, since the stabilizer captured the unreacted organic acid and basic compound, it did not significantly affect binder characteristics.
Also, the stabilizer reacted with the unreacted organic acid to increase pot life. Furthermore, in a case in which the stabilizer is added in an amount of 9 wt% or more based on a total weight of the binder, since precipitation in the binder may occur due to the excessive amount of the stabilizer, it may be desirable to use the stabilizer in an amount of 3 wt% to 9 wt% or less.
Also, if the amount of the organic acid with respect to the water was increased, the viscosity of the binder was increased, but, since the organic acid may react with MgO in the refractory material during the preparation of the product to cause surface dryness of the refractory material before forming, pot life and reactivity with the refractory material may also be ensured by the addition of the stabilizer.

**Examples 45 to 52. Preparation of Liquid Binders for Refractory**

Liquid binders for a refractory were prepared by using each component in an amount listed in Table 7.
Specifically, the liquid binder for a refractory according to the present invention is a water-based binder, wherein properties may be deteriorated due to the evaporation of moisture during storage and quality stability may be reduced due to the evaporation of moisture caused by heat generated during kneading. Thus, after the binder was prepared by adding the viscosity enhancer, viscosity, material forming strength, and moisture evaporation were measured by the following methods.

In this case, maltodextrin manufactured by DAESANG was used as corn starch, potato starch powder manufactured by DAESANG was used as potato starch, carbomer manufactured by JASUNG CnT Co., Ltd. was used as carbomer, xanthan gum manufactured by DEOSEN BIOCHEMICAL Ltd. was used as xanthan gum, and molasses (total solid content: 80 wt% or more) manufactured by DAESANG was used as molasses.

1) Viscosity

It was measured by a method described in KS M ISO 2555 using a Brookfield viscometer at 25 °C.

2) Material Forming Strength

82 parts by weight of magnesia, 3 parts by weight of aluminum, and 15 parts by weight of crystalline graphite were mixed as a refractory material, 2 parts by weight of the liquid binder for a refractory was added to prepare a refractory composition. Thereafter, 300 g of the refractory composition was put into a mold having a size of 40 mm × 70 mm (width × length) and pressurized at a pressure of 5 t/cm$^2$ for 1 minute to prepare a specimen. Thereafter, after drying the specimen at 200°C for 12 hours, compressive strength was measured using a compressive strength meter (KUMKANG) and it was set as a material forming strength.

3) Moisture Evaporation

100 g of the liquid binder for a refractory was accurately weighed to measure initial mass, and mass after a treatment in a dryer at 40°C for 1 hour (mass after heat treatment) was measured. Thereafter, a mass reduction rate (wt%) of the mass after the heat treatment relative to the initial mass was measured.

[Table 7]

| Component (parts by weight) | | Example 45 | Example 46 | Example 47 | Example 48 | Example 49 | Example 50 | Example 51 |
|---|---|---|---|---|---|---|---|---|
| Caustic calcined magnesia (MgO) | | 7.5 | 7.5 | 7.5 | 7.5 | 7.5 | 7.5 | 7.5 |
| Water | | 100 | 100 | 100 | 100 | 100 | 100 | 100 |
| Citric acid | | 50 | 50 | 50 | 50 | 50 | 50 | 50 |
| Tartaric acid (stabilizer) | | 5 | 5 | 5 | 5 | 5 | 5 | 5 |
| Viscosity enhancer | Corn starch | | 1 | | | | | |
| | Potato starch | | | 5 | | | | |
| | Carbomer | | | | 2 | | | |
| | Xanthan gum | | | | | 2 | | |
| | Methyl cellulose | | | | | | 2 | |
| | Molasses | | | | | | | 5 |
| Physical properties | Viscosity (cps) | 200 | 370 | 350 | 360 | 370 | 350 | 300 |
| | Material forming strength (kg/cm$^2$) | 100 | 115 | 110 | 105 | 107 | 130 | 132 |
| | Moisture evaporation (wt%) | 5.2 | 2.0 | 2.4 | 2.2 | 2.1 | 2.5 | 3.6 |

As illustrated in Table 7, viscosities at 25°C of the binders of Examples 46 to 51 including the viscosity enhancer were increased to 300 cps to 370 cps in comparison to the binder of Example 45 without the viscosity enhancer. Also, with respect to the specimens prepared from the binders of Examples 46 to 51, forming strengths were improved by 5% to 32% in comparison to the binder of Example 45 without the viscosity enhancer. Furthermore, with respect to Examples 46 to 51, a weight loss due to moisture evaporation was suppressed by more than 50% in comparison to Example 45.

Also, since a phenol resin, as a conventional binder, has a high viscosity of 400 cps at 25°C, an agglomeration phenomenon occurs during kneading, but, with respect to the binder of the present invention, pot life may be secured and kneading property may be improved by controlling the addition amount and type of the viscosity enhancer.

**Examples 52 to 57 and Comparative Examples 1 and 2. Preparation of Magnesia-Carbon (MgO-C)-based Refractory Bricks**

Liquid binders for a refractory were prepared by using each component in an amount listed in Table 8.

Specifically, after water and an organic acid were mixed, a basic compound was added to react and a stabilizer and a viscosity enhancer were then added to prepare the liquid binder for a refractory.

[Table 8]

| Component (parts by weight) | | Binder 1 | Binder 2 | Binder 3 | Binder 4 | Binder 5 | Binder 6 |
|---|---|---|---|---|---|---|---|
| Water | | 100 | 100 | 100 | 100 | 100 | 100 |
| Organic acid | | 50 | 50 | 50 | 75 | 75 | 75 |
| Basic compound | MgO | 5 | | | 5 | | |
| | NaOH | | 5 | | | 5 | |
| | $K_2O$ | | | 3 | | | 3 |
| Stabilizer | Tartaric acid | 5 | 5 | 5 | 5 | 5 | 5 |
| Viscosity enhancer | Corn starch | 1 | 1 | 1 | 1 | 1 | 1 |

Thereafter, refractory bricks, which are refractories, were prepared by using each component in an amount listed in Table 9. In this case, after magnesia, aluminum, and crystalline graphite, which were refractory materials, were mixed, the liquid binder for a refractory was added, kneading was performed at 25°C to 35°C for 15 minutes, and the mixture was formed into a size of 60 mm × 60 mm × 60 mm, dried at 200°C for 12 hours, and sintered at 1,000°C for 12 hours to prepare the refractory.

In this case, a product having a bulk specific gravity of 0.98 g/cm$^3$, a specific surface area of 1 m$^2$/g, and an average particle diameter of 350 um was used as the crystalline graphite, and a product having an average particle diameter of 4 mm was used as the magnesia. Also, 8027 (product number) manufactured by KANGNAM CHEMICAL was used as a phenol resin, and molasses (total solid content of 80% or more) manufactured by DAESANG was used as molasses.

Physical properties of the prepared refractories were measured by the following methods, and forming specific gravity, physical properties after drying, physical properties after sintering, and erosion resistance according to type and addition amount of the basic compound during the preparation of the binder were compared.

1) Bulk Specific Gravity

The refractory was put into white kerosene (impregnating liquid) according to KSL 3114 (2010) and bulk specific gravity after drying or after sintering was calculated using Equation 1 below.

[Equation 1]

$$\rho_b \text{(bulk specific gravity)} = m_1/(m_3-m_2) \times \rho_{liq}$$

$m_1$: dry mass (g) of the refractory
$m_2$: apparent mass (g) of the impregnated refractory
$m_3$: mass (g) of the impregnated sample
$\rho_{liq}$: density of the impregnating liquid

2) Porosity

The refractory was put into white kerosene (impregnating liquid) according to KSL 3114 (2010) and apparent porosity after drying or after sintering was calculated using Equation 2 below.

$$[\text{Equation 2}]$$

$$\pi_a(porosity) = (m_3-m_1)/(m_3-m_2) \times 100$$

$m_1$: dry mass (g) of the refractory
$m_2$: apparent mass (g) of the impregnated refractory
$m_3$: mass (g) of the impregnated sample

3) Compressive Strength

Compressive strength of the refractory with a size of 60 mm $\times$ 60 mm $\times$ 60 mm was measured according to a method described in KS L 3115 using a hydraulic compressive strength tester.

4) Erosion Resistance

The refractory was heated to 1,650°C to 1,700°C with a burner, and steel and a steel slag, as an erosive agent, were mixed in a weight ratio of 1:1 to measure erosion resistance of the mixture using a rotary erosion tester.
The erosion resistance was expressed as an erosion index relative to a reference specimen, and an erosion amount of Example 53 was expressed as an erosion index of 100. In this case, the lower the erosion index is, the better the erosion resistance is.

5) Harmful Gas Analysis

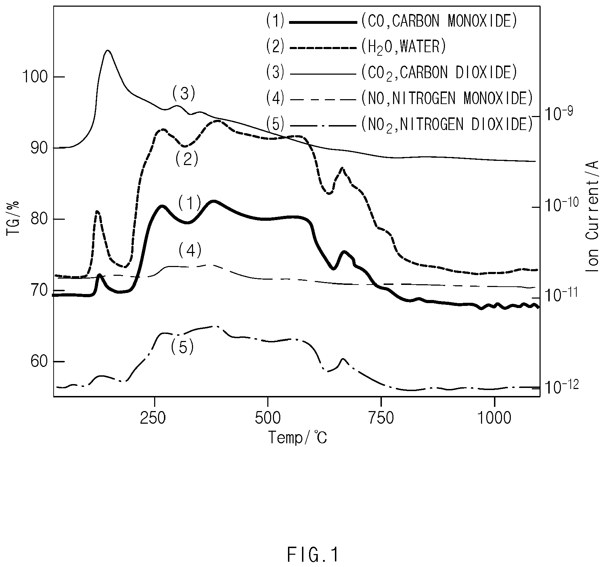

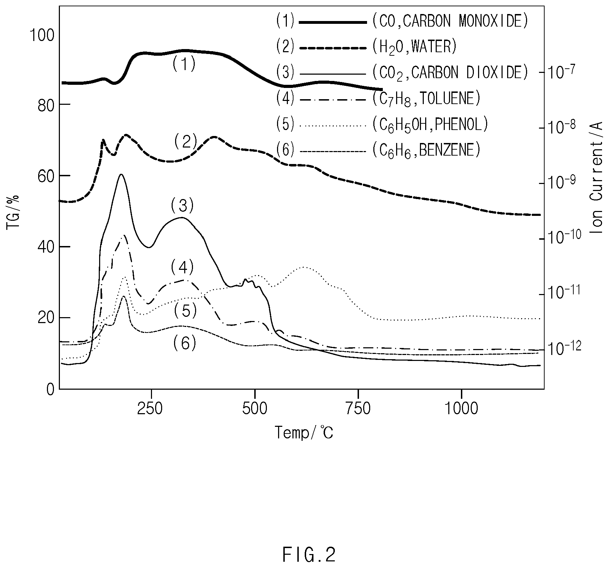

Mass of gas, which was released when a weight was decreased during thermal decomposition analysis of the refractory, was measured and components of the released decomposition gas were analyzed using thermal analysis and mass spectrometry (STA-MS), and the results thereof are illustrated in FIGS. 1 and 2. FIG. 1 is a component analysis result of the decomposition gas released from the refractory of Example 52, and FIG. 2 is a component analysis result of the decomposition gas released from the refractory of Comparative Example 1.

6) Permanent Linear Expansion

It is to measure a linear change of the refractory after sintering, wherein, after the refractory with a size of 50 mm $\times$ 40 mm $\times$ 60 mm was charged into a crucible filled with coke, it was sintered at 1,500°C for 5 hours and cooled to room temperature, and a ratio of a length changed with respect to an initial length was then calculated to measure a permanent linear change.
[Table 9]

| Category (parts by weight) | | | Comparative Examples | | Examples | | | | | |
|---|---|---|---|---|---|---|---|---|---|---|
| | | | 1 | 2 | 52 | 53 | 54 | 55 | 56 | 57 |
| Refracto ry material | | Magnesia | 82 | 82 | 82 | 82 | 82 | 82 | 82 | 82 |
| | | Aluminum | 3 | 3 | 3 | 3 | 3 | 3 | 3 | 3 |
| | | Crystalline graphite | 15 | 15 | 15 | 15 | 15 | 15 | 15 | 15 |
| Phenol resin | | | 3 | - | - | - | - | - | - | - |
| Molasses | | | - | 3 | - | - | - | - | - | - |
| Binder 1 | | | | | 2 | | | | | |
| Binder 2 | | | | | | 2 | | | | |

(continued)

| Category (parts by weight) | | Comparative Examples | | Examples | | | | | |
|---|---|---|---|---|---|---|---|---|---|
| | | 1 | 2 | 52 | 53 | 54 | 55 | 56 | 57 |
| Binder 3 | | | | | | 2 | | | |
| Binder 4 | | | | | | | 2 | | |
| Binder 5 | | | | | | | | 2 | |
| Binder 6 | | | | | | | | | 2 |
| Forming specific gravity of refractory | | 3.00 | 2.98 | 3.03 | 3.01 | 3.01 | 3.05 | 3.02 | 3.02 |
| After drying | Bulk specific gravity (g/cm$^3$) | 2.98 | 2.97 | 3.01 | 2.99 | 2.99 | 3.03 | 3.00 | 3.00 |
| | Porosity (%) | 4.7 | 5.6 | 4.2 | 4.4 | 4.4 | 3.9 | 4.2 | 4.3 |
| | Compressive strength (kg/cm$^2$) | 370 | 315 | 371 | 362 | 355 | 389 | 370 | 369 |
| After sinterin 9 | Bulk specific gravity (g/cm$^3$) | 2.96 | 2.94 | 2.99 | 2.96 | 2.97 | 3.01 | 2.98 | 2.97 |
| | Porosity (%) | 9.50 | 13.60 | 9.40 | 9.60 | 9.20 | 9.20 | 9.50 | 9.50 |
| | Compressive strength (kg/cm$^2$) | 343 | 214 | 332 | 329 | 315 | 342 | 338 | 330 |
| Erosion resistance | | 100 | 120 | 90 | 100 | 100 | 85 | 100 | 100 |
| Permanent linear expansion (%) | | 0.43 | 0.56 | 0.42 | 0.43 | 0.42 | 0.39 | 0.43 | 0.43 |

As illustrated in Table 9, forming specific gravity, physical properties after drying, and physical properties after sintering of the examples were equal to or better than those of Comparative Example 1 using the phenol resin. Particularly, Examples 52 and 55 had better forming specific gravity and erosion resistance than the refractories using the phenol resin and the molasses as the binder.

As illustrated in FIGS. 1 and 2, with respect to the refractory of Comparative Example 1, benzene ($C_6H_6$), toluene ($C_7H_8$), and phenol ($C_6H_5OH$) were released (see FIG. 2), but the refractory of Example 52 had excellent environmental friendliness because hazardous substances, such as benzene ($C_6H_6$), toluene ($C_7H_8$), and phenol ($C_6H_5OH$), were not released at all (see FIG. 1).

**Examples 58 to 63 and Comparative Examples 3 and 4. Preparation of Magnesia-Alumina-Carbon (MAC)-based Refractory Bricks**

Liquid binders for a refractory were prepared by using each component in an amount listed in Table 8. Thereafter, refractory bricks, which are refractories, were prepared by using each component in an amount listed in Table 10.

Specifically, after magnesia, alumina, aluminum, and crystalline graphite, which were refractory materials, were mixed, the liquid binder for a refractory was added, kneading was performed at 25°C to 35°C for 15 minutes, and the mixture was formed into a size of 60 mm × 60 mm × 60 mm, dried at 200°C for 12 hours, and sintered at 1, 000°C for 12 hours to prepare the refractory. Physical properties of the prepared refractory were measured in the same manner as in Example 52, and an erosion amount of Example 63 was expressed as an erosion index of 100.

In this case, a product having a bulk specific gravity of 0.98 g/cm3, a specific surface area of 1 m$^2$/g, and an average particle diameter of 350 um was used as the crystalline graphite, and a product having an average particle diameter of 4 mm was used as the magnesia. Also, 8027 (product number) manufactured by KANGNAM CHEMICAL was used as a phenol resin, and molasses (total solid content of 80% or more) manufactured by DAESANG was used as molasses.

[Table 10]

| Category (parts by weight) | | Comparative Examples | | Examples | | | | | |
|---|---|---|---|---|---|---|---|---|---|
| | | 3 | 4 | 58 | 59 | 60 | 61 | 62 | 63 |
| Refracto ry material | Magnesia | 72 | 72 | 72 | 72 | 72 | 72 | 72 | 72 |
| | Alumina | 10 | 10 | 10 | 10 | 10 | 10 | 10 | 10 |
| | Aluminum | 3 | 3 | 3 | 3 | 3 | 3 | 3 | 3 |
| | Crystalline graphite | 15 | 15 | 15 | 15 | 15 | 15 | 15 | 15 |
| Phenol resin | | 3 | - | - | - | - | - | - | - |
| Molasses | | - | 3 | - | - | - | - | - | - |
| Binder 1 | | | | 2 | | | | | |
| Binder 2 | | | | | 2 | | | | |
| Binder 3 | | | | | | 2 | | | |
| Binder 4 | | | | | | | 2 | | |
| Binder 5 | | | | | | | | 2 | |
| Binder 6 | | | | | | | | | 2 |
| Forming specific gravity of refractory | | 3.08 | 3.06 | 3.09 | 3.07 | 3.08 | 3.1 | 3.08 | 3.08 |
| After drying | Bulk specific gravity (g/cm$^3$) | 3.06 | 3.03 | 3.07 | 3.05 | 3.06 | 3.07 | 3.06 | 3.05 |
| | Porosity (%) | 4.3 | 6.2 | 4.2 | 4.3 | 4.4 | 4.1 | 4.4 | 4.5 |
| | Compressive strength (kg/cm$^2$) | 383 | 285 | 389 | 381 | 379 | 392 | 381 | 380 |
| After sinterin 9 | Bulk specific gravity (g/cm$^3$) | 3 | 2.97 | 3.02 | 3 | 3.01 | 3.02 | 3 | 2.99 |
| | Porosity (%) | 9.7 | 13.2 | 9.2 | 9.6 | 9.4 | 9.1 | 9.8 | 9.7 |
| | Compressive strength (kg/cm$^2$) | 287 | 195 | 291 | 285 | 284 | 299 | 279 | 281 |
| Erosion resistance | | 100 | 120 | 97 | 99 | 100 | 85 | 98 | 100 |
| Permanent linear expansion (%) | | 0.95 | 0.99 | 0.95 | 0.94 | 0.96 | 0.94 | 0.95 | 0.96 |

As illustrated in Table 10, forming specific gravity, physical properties after drying, and physical properties after sintering of Examples 58 to 63 were equal to or better than those of Comparative Example 3. Particularly, the refractory of Example 61 had better physical properties, for example, larger forming specific gravity, larger bulk specific gravity after drying and sintering, lower porosity, and higher compressive strength, and had better erosion resistance than Comparative Examples 3 and 4 using the phenol resin or molasses, which is a conventional binder, as the binder.

**Examples 64 to 69 and Comparative Examples 5 and 6. Preparation of Alumina-Silicon Carbide-Magnesia (AGM)-based Refractory Bricks**

Liquid binders for a refractory were prepared by using each component in an amount listed in Table 8. Thereafter, refractory bricks, which are refractories, were prepared by using each component in an amount listed in Table 11.
Specifically, after magnesia, alumina, aluminum, and crystalline graphite, which were refractory materials, were mixed, the binder for a refractory was added, kneading was performed at 25°C to 35°C for 15 minutes, and the mixture was formed into a size of 60 mm × 60 mm × 60 mm, dried at 200°C for 12 hours, and sintered at 1,000°C for 12 hours to prepare the refractory. Physical properties of the prepared refractory were measured in the same manner as in Example 52, and an erosion amount of Example 65 was expressed as an erosion index of 100.
In this case, a product having a bulk specific gravity of 0.98 g/cm$^3$, a specific surface area of 1 m$^2$/g, and an average particle diameter of 350 um was used as the crystalline graphite, and a product having an average particle diameter of 4 mm was used as the magnesia. Also, 8027 (product number) manufactured by KANGNAM CHEMICAL was used as a phenol resin, and molasses (total solid content of 80% or more) manufactured by DAESANG was used as molasses.

[Table 11]

| Category (parts by weight) | | | Comparative Examples | | Examples | | | | | |
|---|---|---|---|---|---|---|---|---|---|---|
| | | | 5 | 6 | 64 | 65 | 66 | 67 | 68 | 69 |
| Refracto ry material | | Magnesia | 15 | 15 | 15 | 15 | 15 | 15 | 15 | 15 |
| | | Alumina | 67 | 67 | 67 | 67 | 67 | 67 | 67 | 67 |
| | | Aluminum | 3 | 3 | 3 | 3 | 3 | 3 | 3 | 3 |
| | | Crystalline graphite | 15 | 15 | 15 | 15 | 15 | 15 | 15 | 15 |
| Phenol resin | | | 3 | - | - | - | - | - | - | - |
| Molasses | | | - | 3 | - | - | - | - | - | - |
| Binder 1 | | | | | 2 | | | | | |
| Binder 2 | | | | | | 2 | | | | |
| Binder 3 | | | | | | | 2 | | | |
| Binder 4 | | | | | | | | 2 | | |
| Binder 5 | | | | | | | | | 2 | |
| Binder 6 | | | | | | | | | | 2 |
| Forming specific gravity of refractory | | | 3.26 | 3.22 | 3.27 | 3.25 | 3.26 | 3.31 | 3.28 | 3.26 |
| After drying | | Bulk specific gravity (g/cm$^3$) | 3.24 | 3.2 | 3.25 | 3.24 | 3.24 | 3.28 | 3.25 | 3.24 |
| | | Porosity (%) | 3.8 | 5.2 | 3.6 | 3.8 | 3.9 | 3.2 | 3.7 | 3.8 |
| | | Compressive strength (kg/cm$^2$) | 594 | 425 | 597 | 590 | 589 | 615 | 590 | 593 |
| After sinterin g | | Bulk specific gravity (g/cm$^3$) | 3.2 | 3.15 | 3.21 | 3.2 | 3.2 | 3.23 | 3.21 | 3.2 |
| | | Porosity (%) | 9.1 | 12.5 | 9.1 | 9.2 | 9.3 | 8.7 | 9.1 | 9.1 |
| | | Compressive strength (kg/cm$^2$) | 307 | 189 | 311 | 305 | 307 | 325 | 308 | 307 |
| Erosion resistance | | | 100 | 135 | 95 | 100 | 98 | 87 | 99 | 101 |
| Permanent linear expansion (%) | | | 0.89 | 0.99 | 0.89 | 0.89 | 0.9 | 0.84 | 0.89 | 0.9 |

As illustrated in Table 11, forming specific gravity, physical properties after drying, and physical properties after sintering of Examples 64 to 69 were equal to or better than those of Comparative Example 5. Particularly, the refractory of Example 67 had better physical properties, for example, larger forming specific gravity, larger bulk specific gravity after drying and sintering, lower porosity, and higher compressive strength, and had better erosion resistance than Comparative Examples 5 and 6 using the phenol resin or molasses as the binder.

**Examples 70 to 74 and Comparative Examples 7 and 8. Preparation of Refractories**

Liquid binders for a refractory were prepared by using each component in an amount listed in Table 8. Thereafter, refractory bricks, which are refractories, were prepared by using each component in an amount listed in Table 12.
Specifically, after magnesia, aluminum, and crystalline graphite, which were refractory materials, were mixed, a hot property improving agent was added, the binder for a refractory was added, kneading was performed at 25°C to 35°C for 15 minutes, and the mixture was formed into a size of 60 mm × 60 mm × 60 mm, dried at 200°C for 12 hours, and sintered at 1,000°C for 12 hours to prepare the refractory. Physical properties of the prepared refractory were measured in the same manner as in Example 53, and an erosion amount of Comparative Example 7 was expressed as an erosion index of 100.
In this case, a product having a bulk specific gravity of 0.98 g/cm3, a specific surface area of 1 m$^2$/g, and an average particle diameter of 350 um was used as the crystalline graphite, and a product having an average particle diameter of 4 mm was used as the magnesia. Also, 8027 (product number) manufactured by KANGNAM CHEMICAL was used as a phenol resin, and molasses (total solid content of 80% or more) manufactured by DAESANG was used as molasses.

[Table 12]

| Category (parts by weight) | | Comparative Examples | | Examples | | | | |
|---|---|---|---|---|---|---|---|---|
| | | 7 | 8 | 70 | 71 | 72 | 73 | 74 |
| Refracto ry material | Magnesia | 82 | 82 | 82 | 82 | 82 | 82 | 82 |
| | Aluminum | 3 | 3 | 3 | 3 | 3 | 3 | 3 |
| | Crystalline graphite | 15 | 15 | 15 | 15 | 15 | 15 | 15 |
| Binder 1 | | - | - | 2 | 2 | 2 | 2 | 2 |
| Phenol resin | | 3 | - | - | - | - | - | - |
| Molasses | | - | 3 | - | - | - | - | - |
| Hot property improvin g agent | Pitch | - | - | - | 0.4 | - | - | - |
| | Carbon black | - | - | - | - | 0.4 | - | - |
| | $B_4C$ | - | - | - | - | - | 0.4 | - |
| | $Si_3N_4$ | - | - | - | - | - | - | 0.4 |
| Forming specific gravity of refractory | | 3 | 2.98 | 3.03 | 3.02 | 3.02 | 3.03 | 3.04 |
| After drying | Bulk specific gravity ($g/cm^3$) | 2.98 | 2.97 | 3.01 | 3 | 2.99 | 3.01 | 3.02 |
| | Porosity (%) | 4.7 | 5.6 | 4.2 | 4.2 | 4.3 | 4.3 | 4.2 |
| | Compressive strength ($kg/cm^2$) | 370 | 315 | 371 | 370 | 373 | 371 | 370 |
| After sinterin g | Bulk specific gravity ($g/cm^3$) | 2.96 | 2.94 | 2.99 | 2.98 | 2.97 | 2.98 | 2.98 |
| | Porosity (%) | 9.5 | 13.6 | 9.4 | 8.9 | 9.2 | 8.9 | 9 |
| | Compressive strength ($kg/cm^2$) | 343 | 214 | 332 | 348 | 350 | 349 | 348 |
| Erosion resistance | | 100 | 120 | 90 | 91 | 89 | 91 | 85 |
| Permanent linear expansion (%) | | 0.43 | 0.56 | 0.42 | 0.37 | 0.38 | 0.37 | 0.35 |

As illustrated in Table 12, with respect to the refractories of Examples 71 to 74 to which the hot property improving agent, such as pitch, carbon black, $B_4C$, and $Si_3N_4$, were added, forming specific gravity, physical properties after drying, and physical properties after sintering were all equal to or better than those of Example 70 which did not include the hot property improving agent. Particularly, Examples 71 to 74 had better erosion resistance and spalling resistance than Comparative Example 7.

Also, with respect to Example 74 containing silicon nitride ($Si_3N_4$), erosion resistance was improved by 15% or more and permanent linear expansion was also improved in comparison to Comparative Example 7.

## Claims

1. A liquid binder for a refractory, the liquid binder including:
   a reactant of a basic compound including at least one selected from the group consisting of an alkali metal and an alkaline earth metal; and an organic acid containing three or more functional groups.

2. The liquid binder for a refractory of claim 1, wherein the alkali metal includes at least one selected from the group consisting of at least one metal selected from the group consisting of sodium (Na) and potassium (K), an oxide thereof, a hydrate thereof, a halide thereof, a sulfide thereof, a nitride thereof, an oxysalt thereof, a carbonate thereof, and an organic acid salt thereof.

3. The liquid binder for a refractory of claim 1, wherein the alkaline earth metal includes at least one selected from the group consisting of at least one metal selected from the group consisting of magnesium (Mg) and calcium (Ca), an oxide thereof, a hydrate thereof, a halide thereof, a sulfide thereof, a nitride thereof, an oxysalt thereof, a carbonate thereof, and an organic acid salt thereof.

4. The liquid binder for a refractory of claim 1, wherein the organic acid includes at least one selected from the group consisting of citric acid and ethylenediaminetetraacetic acid.

5. The liquid binder for a refractory of claim 1, further including water,
   wherein the liquid binder for a refractory includes the water and the organic acid in a weight ratio of 1.0 : 0.2 to 1.0 : 0.8.

6. The liquid binder for a refractory of claim 1, wherein the liquid binder for a refractory includes the organic acid and the basic compound in a weight ratio of 5 : 1.0 to 100 : 1.0.

7. The liquid binder for a refractory of claim 1, further including at least one selected from the group consisting of a stabilizer and a viscosity enhancer.

8. The liquid binder for a refractory of claim 7, wherein the stabilizer includes at least one selected from the group consisting of tartaric acid, lactic acid, oxalic acid, boric acid, and phosphoric acid.

9. The liquid binder for a refractory of claim 7, wherein the viscosity enhancer includes at least one selected from the group consisting of corn starch, potato starch, carbomer, xanthan gum, methyl cellulose, meta methyl cellulose, and molasses.

10. The liquid binder for a refractory of claim 7, wherein the liquid binder for a refractory includes 0.1 wt% to 15 wt% of the stabilizer and 0.1 wt% to 10 wt% of the viscosity enhancer based on a total weight of the liquid binder for a refractory.

11. A refractory including:

    the liquid binder for a refractory of any one of claims 1 to 10; and
    a refractory material.

12. The refractory of claim 11, wherein the refractory material includes at least one selected from the group consisting of magnesia-based, alumina-based, chromium-based, dolomite-based, and graphite-based refractory materials.

13. The refractory of claim 11, further including a hot property improving agent.

14. The refractory of claim 13, wherein the hot property improving agent includes at least one selected from the group consisting of pitch, silicon nitride ($Si_3N_4$), boron carbide ($B_4C$), and carbon black.

15. A refractory brick including:

    the liquid binder for a refractory of any one of claims 1 to 10; and
    a refractory material.

16. The refractory brick of claim 15, wherein the refractory brick is a magnesia-carbon-based refractory brick, a magnesia-alumina-carbon-based refractory brick, an alumina-silica-based refractory brick, a magnesia-chrome-based refractory brick, a magnesia-spinel-based refractory brick, an alumina-silicon carbide-carbon-based refractory brick, an alumina-carbon-based refractory brick, an alumina-silicon carbide-magnesia-based refractory brick, or a magnesia-based refractory brick.

17. The refractory brick of claim 15, wherein the refractory brick is a reduction fired brick, a fired brick, or a non-fired brick.

FIG.1

FIG.2

## INTERNATIONAL SEARCH REPORT

International application No.

**PCT/KR2021/008260**

| A. | CLASSIFICATION OF SUBJECT MATTER |
|---|---|

**C04B 35/63**(2006.01)i; **C04B 35/632**(2006.01)i; **C04B 35/634**(2006.01)i; **C04B 35/636**(2006.01)i; **C04B 35/04**(2006.01)i; **C04B 35/66**(2006.01)i

According to International Patent Classification (IPC) or to both national classification and IPC

| B. | FIELDS SEARCHED |
|---|---|

Minimum documentation searched (classification system followed by classification symbols)

C04B 35/63(2006.01); C04B 14/30(2006.01); C04B 28/22(2006.01); C04B 28/24(2006.01); C04B 35/06(2006.01); C04B 35/524(2006.01); C04B 35/66(2006.01); C04B 9/20(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 바인더 (binder), 벽돌 (block), 알칼리 (alkali), 금속 (metal), 유기산 (organic acid)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-1367790 B1 (EUN SUNG CONCRETE CO., LTD.) 28 February 2014 (2014-02-28) See claims 1-7. | 1-10 |
| Y | | 11-17 |
| Y | KR 10-2018-0088658 A (KERNEOS) 06 August 2018 (2018-08-06) See paragraphs [0035] and [0054]; and claims 1-8. | 11-17 |
| A | KR 10-2006-0065660 A (BLUE MEMBRANES GMBH) 14 June 2006 (2006-06-14) See entire document. | 1-17 |
| A | US 2005-0103235 A1 (HARRISON, A. J. W.) 19 May 2005 (2005-05-19) See entire document. | 1-17 |
| A | US 3923534 A (CASSIDY, J. E.) 02 December 1975 (1975-12-02) See entire document. | 1-17 |

☐ Further documents are listed in the continuation of Box C.　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 March 2022** | **24 March 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/008260**

| Patent document cited in search report | | | Publication date (day/month/year) | Patent family member(s) | | | Publication date (day/month/year) |
|---|---|---|---|---|---|---|---|
| KR | 10-1367790 | B1 | 28 February 2014 | None | | | |
| KR | 10-2018-0088658 | A | 06 August 2018 | CN | 108473376 | A | 31 August 2018 |
| | | | | CN | 108473376 | B | 29 December 2020 |
| | | | | EP | 3176140 | A1 | 07 June 2017 |
| | | | | EP | 3176140 | B1 | 10 April 2019 |
| | | | | EP | 3383821 | A1 | 10 October 2018 |
| | | | | JP | 2019-503958 | A | 14 February 2019 |
| | | | | US | 10717675 | B2 | 21 July 2020 |
| | | | | US | 2018-0265409 | A1 | 20 September 2018 |
| | | | | WO | 2017-093222 | A1 | 08 June 2017 |
| KR | 10-2006-0065660 | A | 14 June 2006 | CN | 100829667 | A | 06 September 2006 |
| | | | | CN | 100829667 | B | 07 April 2010 |
| | | | | EP | 1658248 | A1 | 24 May 2006 |
| | | | | EP | 2025657 | A2 | 18 February 2009 |
| | | | | JP | 2007-500663 | A | 18 January 2007 |
| | | | | US | 2006-0159718 | A1 | 20 July 2006 |
| | | | | WO | 2005-021462 | A1 | 10 March 2005 |
| US | 2005-0103235 | A1 | 19 May 2005 | CN | 100419523 | A | 21 May 2003 |
| | | | | CN | 100419523 | B | 21 April 2010 |
| | | | | EP | 1254083 | A1 | 06 November 2002 |
| | | | | EP | 1254083 | A4 | 03 January 2007 |
| | | | | EP | 1254083 | B1 | 03 August 2011 |
| | | | | JP | 2003-520749 | A | 08 July 2003 |
| | | | | JP | 4913303 | B2 | 11 April 2012 |
| | | | | US | 2003-0041785 | A1 | 06 March 2003 |
| | | | | US | 7347896 | B2 | 25 March 2008 |
| | | | | WO | 01-55049 | A1 | 02 August 2001 |
| US | 3923534 | A | 02 December 1975 | JP | 49-050009 | A | 15 May 1974 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 967408